Europäisches Patentamt

European Patent Office

Office européen des brevets

(11) Publication number: **0 245 659**
A2

## (12) EUROPEAN PATENT APPLICATION

(21) Application number: 87105358.3

(22) Date of filing: 10.04.87

(51) Int. Cl.⁴: **F16H 3/66**

(30) Priority: **18.04.86 US 853787**

(43) Date of publication of application:
**19.11.87 Bulletin 87/47**

(84) Designated Contracting States:
**AT BE CH DE ES FR GB IT LI NL SE**

(71) Applicant: **DEERE & COMPANY**
**1 John Deere Road**
**Moline Illinois 61265(US)**

(72) Inventor: **Michael, Richard Arlo**
**703 Burbank Avenue**
**Waterloo Iowa 50702(US)**

(74) Representative: **Feldmann, Bernhard**
**DEERE & COMPANY European Office, Patent**
**Department Steubenstrasse 36-42 Postfach**
**503**
**D-6800 Mannheim 1(DE)**

(54) **Change speed gearing using two planetary groups.**

(57) Das Planetenräderwechselgetriebe weist eine
Eingangswelle (10), eine Ausgangswelle (12), drei
Bremsen (B1, B2, B3), zwei Kupplungen (C1, C2)
und zwei durch zwei Verbindungen
hintereinandergeschaltete Gruppen (A1, A2) von
Planetengetriebesätzen zum Schalten von vier
Vorwärtsgängen und zwei Rückwärtsgängen bei
einer Leistungsverzweigung in den meisten Gängen
auf.

FIG. 1

EP 0 245 659 A2

## Aus zwei Gruppen bestehendes Planetenräderwechselgetriebe

Die Erfindung bezieht sich auf ein aus zwei Gruppen bestehendes Planetenräderwechselgetriebe mit einer Eingangswelle, einer Ausgangswelle, drei Bremsen und zwei Kupplungen, wobei die erste Gruppe ein erstes Sonnenrad, ein zweites Sonnenrad, ein zum ersten Sonnenrad konzentrisch angeordnetes Hohlrad und einen Umlaufräderträger mit wenigstens einem Satz mit dem Hohlrad und dem ersten Sonnenrad kämmenden Umlaufrädern und die zweite Gruppe ein Sonnenrad, ein Hohlrad und einen Umlaufräderträger mit mit dem Hohlrad und dem Sonnenrad der zweiten Gruppe kämmenden Umlaufrädern aufweist und das erste Sonnenrad der ersten Gruppe mit der Eingangswelle kuppelbar ist.

Bei dem bekannten Planetenräderwechselgetriebe, von dem die Erfindung ausgeht (DE-A-1 780 702), wird das Hohlrad der ersten Gruppe immer angetrieben und der Umlaufräderträger der ersten Gruppe ist mit der Ausgangswelle fest verbunden. Mit diesem bekannten Getriebe lassen sich vier Vorwärtsgänge und ein Rückwärtsgang schalten, wobei die ersten drei Vorwärtsgänge durch Anlegen jeweils einer Bremse und der vierte Vorwärtsgang durch Einrücken beider Kupplungen bei gelösten Bremsen erreicht werden. Den Rückwärtsgang erhält man durch Einrücken einer Kupplung und einer Bremse.

Die mit der Erfindung zu lösende Aufgabe wird darin gesehen, dieses bekannte Getriebe derart weiterzubilden, daß ein weiterer Rückwärtsgang - schaltbar ist. Diese Aufgabe ist gemäß der Erfindung dadurch gelöst worden, daß der Umlaufräderträger der ersten Gruppe einen zweiten Satz Umlaufräder aufweist, die mit dem ersten Satz Umlaufräder und dem zweiten Sonnenrad kämmen, das zweite Sonnenrad mit der Eingangswelle kuppelbar ist und das zweite Sonnenrad, das Ringrad und der Umlaufräderträger der ersten Gruppe abbremsbar sind. Auf diese Weise ist ein kompakt zu bauendes Getriebe geschaffen, das vier Vorwärts- und zwei Rückwärtsgänge ermöglicht, wobei in den meisten Gängen eine Leistungsverzweigung stattfindet, so daß trotz der Schaltung unter Last die einzelnen Zahnräder relativ klein gehalten werden können.

Vorteilhaft ist nach der Erfindung das erste Sonnenrad der ersten Gruppe und das Sonnenrad der zweiten Gruppe auf einer gemeinsamen Welle angeordnet und der Umlaufräderträger der ersten Gruppe mit dem Hohlrad der zweiten Gruppe drehfest verbunden, wodurch lediglich zwei Verbindungen zwischen beiden Gruppen bestehen.

In der Zeichnung ist ein nachfolgend näher erläutertes Ausführungsbeispiel der Erfindung dargestellt. Es zeigt:

Fig. 1 das Planetenräderwechselgetriebe in - schematischer Darstellung mit dem beim ersten Gang verlaufenden Kraftverlauf;

Fig. 2 eine Tafel mit den bei den einzelnen Gängen einzurückenden Kupplungen und Bremsen und

Fig. 3 bis 7 den Kraftverlauf für die weiteren Vorwärtsgänge 2 bis 4 und die Rückwärtsgänge 1 und 2.

Eine bevorzugte Ausführungsform des Planetenräderwechselgetriebes ist in der Zeichnung dargestellt. Es ist vornehmlich gedacht für den Einsatz in Ackerschleppern oder Baumaschinen und weist eine Eingangswelle 10 und eine Ausgangswelle 12 auf. Die Eingangswelle 10 wird mit einem Verbrennungsmotor über einen Drehmomentenwandler verbunden, wobei die Ausgangswelle 12 mit einem weiteren Schaltgetriebe versehen sein kann, um den Antrieb zu den Rädern zu leiten. Dieses weitere Schaltgetriebe ist aber nicht unbedingt erforderlich.

Das Planetenräderwechselgetriebe ist aus zwei Gruppen zusammengesetzt, und zwar besteht die erste Gruppe A1 aus einem Verbundplanetengetriebe und die zweite Gruppe A2 aus einem einfachen Planetengetriebeteil. Zum Erreichen der verschiedenen Schaltfunktionen sind Kupplungen C1 und C2 und Bremsen B1, B2 und B3 vorgesehen. Die Anzahl der einzelnen Zähne an den Zahnrädern ist durch die Zahl vor dem Buchstaben T angedeutet. Aus Gründen der Einfachheit und Klarheit sind Lager. Führungen, Hülsen und andere Einzelheiten, die für den Einsatz des Planetenräderwechselgetriebes erforderlich und dem Fachmann geläufig sind, nicht dargestellt.

Die Gruppe A1 wird auch als Ravigneaux-Getriebe bezeichnet und besteht aus einem ersten Sonnenrad 14. das auf einer Welle 15 angeordnet ist, die die Hauptachse des Getriebes bildet und die um ihre Längsachse drehen kann. Das erste Sonnenrad 14 kämmt mit einem ersten Satz Umlaufräder 18, die zwei Zahnkränze aufweisen. Bei der vorliegenden Ausführung haben die Zahnkränze der Umlaufräder 18 eine gleiche Zähnezahl und einen gleichen Durchmesser. jedoch kann der Durchmesser der Umlaufräder geändert werden. um andere Getriebeübersetzungen zu erhalten. Im einzelnen kämmt ein Zahnkranz 20 an einem Ende des Umlaufrades 18 mit einem Zahnkranz 22 des ersten Sonnenrades. Gleichermaßen kämmt der Zahnkranz 20 mit den Zähnen 24 eines Hohlrades 26.

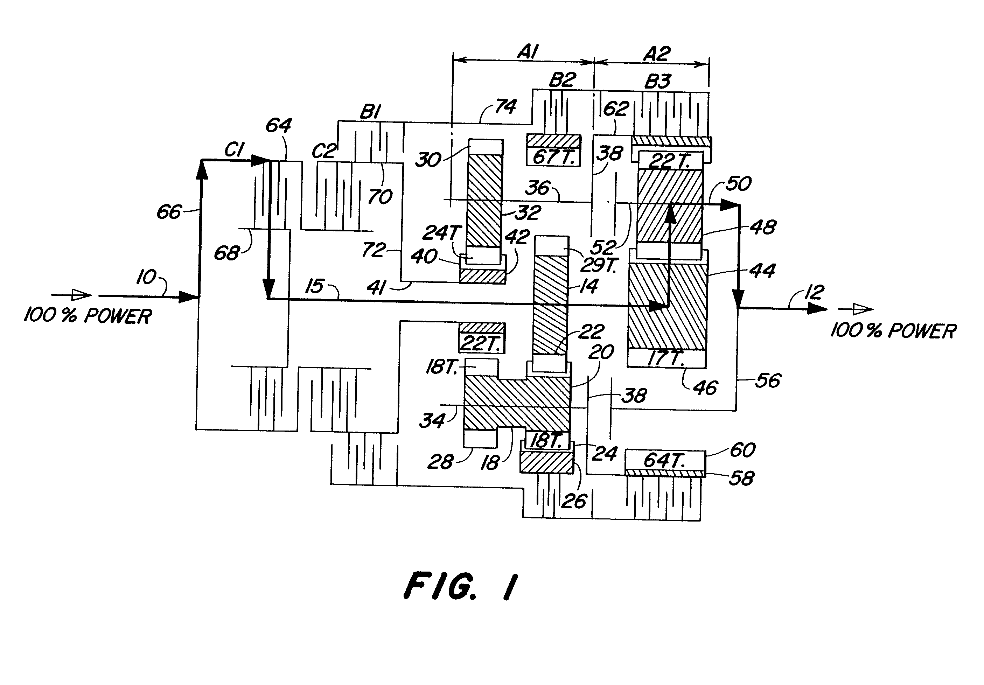

das zu dem ersten Sonnenrad 14 axial ausgerichtet ist sowie zu dem Zahnkranz 20 des Umlaufrades 18. Das Hohlrad 26 ist koaxial und drehbar um die Welle 15 angeordnet. An seinem anderen Ende ist der Satz der Umlaufräder 18 mit einem Zahnkranz 28 versehen, die in einen Zahnkranz 30 eines zweiten Satzes Umlaufräder 32 eingreifen, die nur einen einzigen Zahnkranz aufweisen. Die Sätze der Umlaufräder 32 und 18 sind drehbar auf Wellen 36 und 34 angeordnet. Obwohl in Fig. 1 der Zeichnung jeweils nur ein Umlaufrad dargestellt ist, wird darauf hingewiesen, daß bei der praktischen Ausführung mehrere Umlaufräder, in der Regel drei vorgesehen sind. Die Wellen 34 und 36 sind in Tragstegen eines Umlaufräderträgers 38 ange ordnet, der konzentrisch um die Welle 15 umläuft. Zusätzlich zu dem Eingriff in den Zahnkranz 28 kämmt der Zahnkranz 30 mit dem Zahnkranz 40 eines zweiten Sonnenrades 42. Letzteres ist auf einer Hohlwelle 41 angeordnet, die konzentrisch um die Welle 15 umlaufen kann. Das Sonnenrad 42 ist axial zu dem zweiten Satz Umlaufräder 32 und zu dem Zahnkranz 28 des ersten Satzes Umlaufräder 18 ausgerichtet.

Zwischen der Gruppe A1 und der Ausgangswelle 12 ist die aus einem einfachen Planetensatz bestehende Gruppe A2 vorgesehen. Diese Gruppe besteht aus einem Sonnenrad 44, das konzentrisch mit der Welle 15 drehfest verbunden ist und einen Zahnkranz 46 aufweist. Dieser greift in einen Zahnkranz 48 eines Umlaufrades 50 ein. Auch hier ist in der Zeichnung lediglich ein einziges Umlaufrad 50 dargestellt und auch hier wird darauf hingewiesen, daß mehrere Umlaufräder zu einem Satz vereinigt werden können. Die Umlaufräder 50 sind auf einer Welle 52 drehbar angeordnet, die mit einem Tragsteg eines Umlaufräderträgers 56 verbunden ist. Der mittlere Bereich dieses Umlaufräderträgers 56 ist mit der Ausgangswelle 12 verbunden, und der Umlaufräderträger 56 läuft konzentrisch mit der Ausgangswelle 12 um die Welle 15 um. Der Zahnkranz 48 des Umlaufrades 50 kämmt außerdem noch mit einem Zahnkranz 60 eines Hohlrades 58, das eine gemeinsame Achse mit dem Sonnenrad 44 hat und frei um diese umlaufen kann.

Die Gruppen A1 und A2 sind durch zwei einfache Verbindungselemente miteinander verbunden. Im einzelnen schließt ein Verbindungselement 62 den Umlaufräderträger 38 der Gruppe A1 an das Hohlrad 58 der Gruppe A2 an. Die andere Verbindung erfolgt über die Welle 15, die das erste Sonnenrad 14 der Gruppe A1 mit dem Sonnenrad 44 der Gruppe A2 verbindet. Diese zwei Verbindungen sind die einzigen Verbindungen zwischen der Eingangswelle und der Ausgangswelle, wobei diese Wellen natürlich in zweckmäßiger Form an die einzelnen Komponenten des Umlauuräderwechselgetriebes anzuschließen sind.

Von der Eingangswelle 10 wird der Kraftverlauf über die Kupplungen C1 oder C2 in die Gruppe A1 bewirkt, wobei die Kupplungen C1 und C2 als Reibungskupplungen mit Lamellenpaketen ausgebildet sind.

Im einzelnen ist ein Teil der Lamellen der Kupplungen C1 und C2 auf einem Doppeltrommelteil 64 angeordnet, der über einen Tragsteg 66 mit der Eingangswelle 10 verbunden ist. Die angetriebenen Elemente der Kupplung C1 sind auf einem Lamellenträger 68 angeordnet, der mit der Welle 15 verbunden ist. Der Lamellenträger 68 ist ebenfalls trommelförmig ausgebildet. Durch das Einrücken der Kupplung C1 wird gleichzeitig der Kraftverlauf von der Eingangswelle 10 zu dem ersten Sonnenrad 14 der Gruppe A1 und zu dem Sonnenrad 44 der Gruppe A2 über die Welle 15 gelangen. Die anzutreibenden Elemente der Kupplung C2 sind auf einem zweiten Lamellenträger 70, der ebenfalls in Trommelform ausgebildet ist, angeordnet. Ein Tragsteg 72 verbindet den Lamellenträger 70 mit der Hohlwelle 41, und durch Einrücken der Kupplung C2 kann der Kraftverlauf von der Eingangswelle 10 über das zweite Sonnenrad 42 zu dem zweiten Satz Umlaufräder 32 gelangen. Die Kupplungen C1 und C2 sind alternativ aber auch gemeinsam einrückbar, wodurch eine direkte Übersetzung, wie nachfolgend noch ausgeführt werden wird, erreichbar ist.

Weitere Übersetzungsverhältnisse werden durch das Anlegen der Bremsen B1, B2, B3 erreicht. Im einzelnen sind die Lamellen der Bremse B1 auf der Außenseite des Lamellenträgers 70 angeordnet. Sie arbeiten mit Lamellen zusammen, die mit dem Getriebegehäuse 74 verbunden sind, wodurch bei eingerückter Kupplung C2 eine Drehung des Lamellenträgers 70 und damit der Hohlwelle 41 verhindert wird. Die Lamellen der Bremse B2 sind auf der Peripherie des Hohlrades 26 vorgesehen und sie arbeiten mit Lamellen, die an der Innenseite des Getriebegehäuses 74 vorgesehen sind, zusammen. Durch Anlegen der Bremse B2 wird damit ein Umlauf des Hohlrades 26 verhindert. Wie ferner aus Fig. 1 der Zeichnung hervorgeht, sind die Lamellen der Bremse B3 einmal auf der Peripherie des Hohlrades 58 in der Gruppe A2 vorgesehen und zum anderen an der Innenseite des Getriebegehäuses 54, so daß beim Anlegen der Bremse B3 das Hohlrad 58 gegen Drehung festgesetzt wird. Allerdings soll durch die Bremse B3 ein Stillstand des Umlaufräderträgers 38 in der Gruppe A1 bewirkt werden, was durch das Verbindungselement 62 erfolgt. Somit wird beim Anlegen der Bremse B3 sowohl das Hohlrad 58 als auch der Umlaufräderträger 38 gegen Drehung festgestellt.

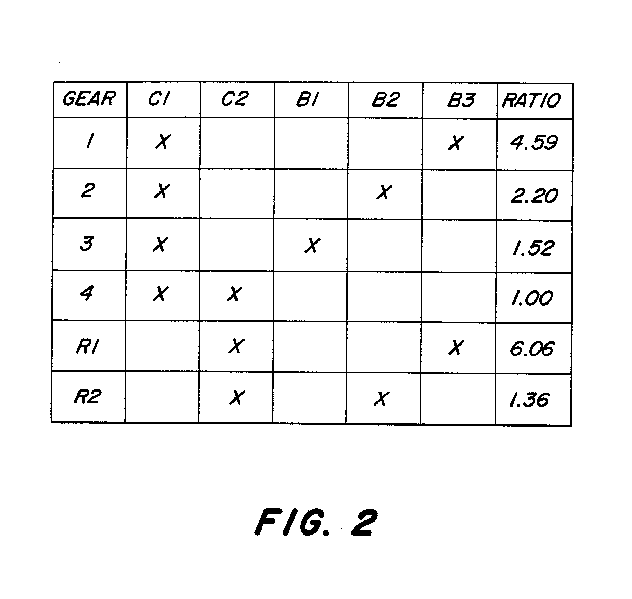

Aufgrund dieser Anordnung der Gruppen A1 und A2, der einzelnen Verbindungen, Bremsen und Kupplungen werden vier Vorwärtsgänge und zwei Rückwärtsgänge erreicht. In Fig. 2 ist dargestellt, welche Bremse und welche Kupplung eingerückt werden muß, um die einzelnen Gänge zu erzielen. Ebenfalls ist in Fig. 2 das Übersetzungsverhältnis angegeben, wobei dieses auf der in Fig. 1 angegebenen Anzahl der Zähne beruht. Durch Ändern der Zähnezahl bzw. der einzelnen Durchmesser können die einzelnen in Fig. 2 angegebenen Übersetzungsverhältnisse geändert werden. Durch Ändern der Verbindungen zwischen den Gruppen A1 und A2 können andere Gangzahlen erreicht werden, so ist zum Beispiel denkbar, daß das erste Sonnenrad in der Gruppe A1 nach wie vor mit dem Sonnenrad in der Gruppe A2 verbunden bleibt, aber die beiden Planetenradträger miteinander in Verbindung stehen und die Ausgangswelle 12 an das Hohlrad 58 angeschlossen wird. Im Ganzen können durch das Ändern der einzelnen Verbindungen sechs verschiedene Anordnungen erreicht werden.

Was die Wirkungsweise anbelangt, so ist für die einzelnen Gänge in den Fig. 1 und 3 bis 7 der Kraftverlauf in den dick ausgezogenen Linien eingezeichnet. In Fig. 1 ist der Kraftverlauf für den ersten Gang wiedergegeben und es handelt sich dabei um die größte Untersetzung. Wie aus Fig. 2 hervorgeht, sind zum Schalten des ersten Ganges die Kupplung C1 und die Bremse B3 einzurücken. Wenn die Kupplung C1 eingerückt ist, wird der Kraftflußverlauf von der Eingangswelle 10 über den Doppeltrommelteil 64 und den Lamellenträger 68 gleichzeitig zu den Sonnenrädern 14 und 44 gelangen. Aufgrund der eingerückten Bremse B3 ist der Umlaufräderträger 38 gegen Drehung festgesetzt, so daß der erste Satz Umlaufräder 18 mit dem ersten Sonnenrad 14 und der zweite Satz Umlaufräder 32 mit dem ersten Satz Umlaufräder 18 reagiert. Sowohl das Hohlrad 26 als auch das zweite Sonnenrad 42, das mit dem ersten Satz Umlaufräder und den Umlaufrädern 32 reagiert, können in diesem Zustand frei umlaufen. Daher wird der Kraftflußverlauf nicht durch die Gruppe A1 erfolgen. Das Anlegen der Bremse B3 bewirkt außerdem, daß das Hohlrad 58 gegen Drehung festgesetzt ist, so daß die Umlaufräder 50 in dem Hohlrad ablaufen und die gesamte Leistung von dem Sonnenrad 44 durch den Umlaufräderträger 56 bis zur Ausgangswelle 12 übertragen wird. Hieraus folgt, daß der Kraftverlauf nur durch die Gruppe A2 geleitet wird.

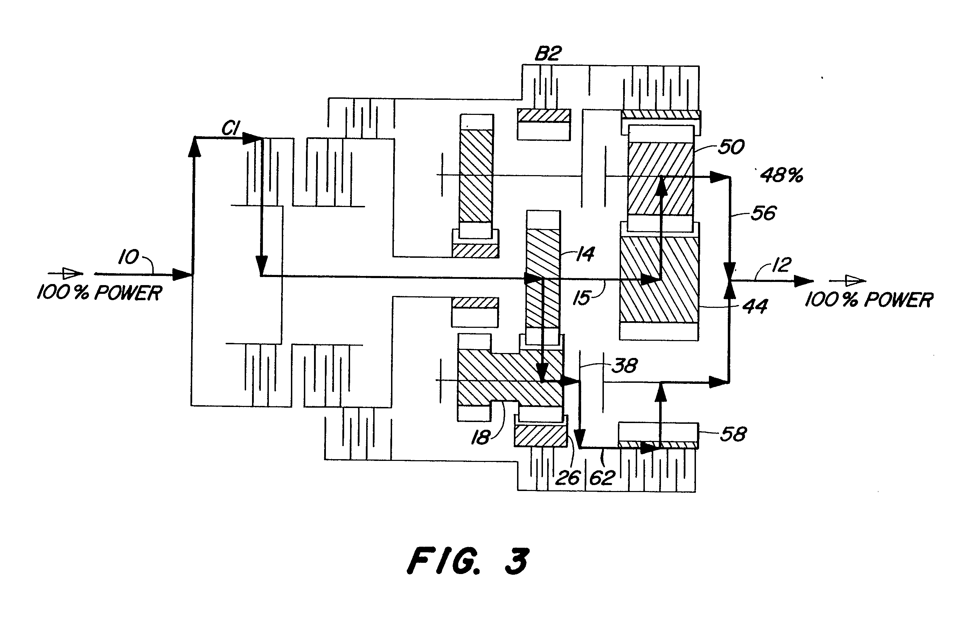

Aus Fig. 2 ist ferner zu entnehmen, daß der zweite Gang dadurch geschaltet wird, daß die Kupplung C1 und die Bremse B2 eingerückt werden. Der Kraftflußverlauf für den zweiten Gang ist in Fig. 3 wiedergegeben, und in diesem Zustand verbindet die Kupplung C1 das erste Sonnenrad 14 und das Sonnenrad 44 mit dem Kraftfluß. Bei offener Bremse B3 und angelegter Bremse B2 wird der Umlaufräderträger 38 umlaufen infolge des positiven Antriebes des ersten Sonnenrades 14, da der erste Satz Umlaufräder 18 mit dem festgesetzten Hohlrad 26 reagiert. Der Umlaufräderträger 38 läuft dann mit einer geringeren Drehzahl um, wobei das erste Sonnenrad 14 und der Umlaufräderträger 38 in der gleichen Drehrichtung rotieren. Wie aus den dick ausgezogenen Linien hervorgeht, wird lediglich ein Teil des Kraftflusses bei dem Sonnenrad 14 abgezweigt und in die Gruppe A2 über das Verbindungselement 62 übertragen. Der andere Teil der Leistung gelangt über die Welle 14 zu dem Sonnenrad 44 der Gruppe A2. Was die Gruppe A2 anbelangt, so weisen das Hohlrad 58 und das Sonnenrad 44 bei diesen Einrückverhältnissen eine gleiche Drehrichtung auf, wobei das Sonnenrad 44 das Hohlrad 58 überläuft. Die gleichzeitige Reaktion des Satzes Umlaufräder 50 mit dem umlaufenden Hohlrad und dem Sonnenrad vergrößert die Drehzahl des Umlaufräderträgers 56 im Vergleich zum ersten Gang. Die Leistungsaufteilung, die im zweiten Gang erreicht wird, ist in Fig. 3 durch die dort angegebenen Prozentzahlen wiedergegeben.

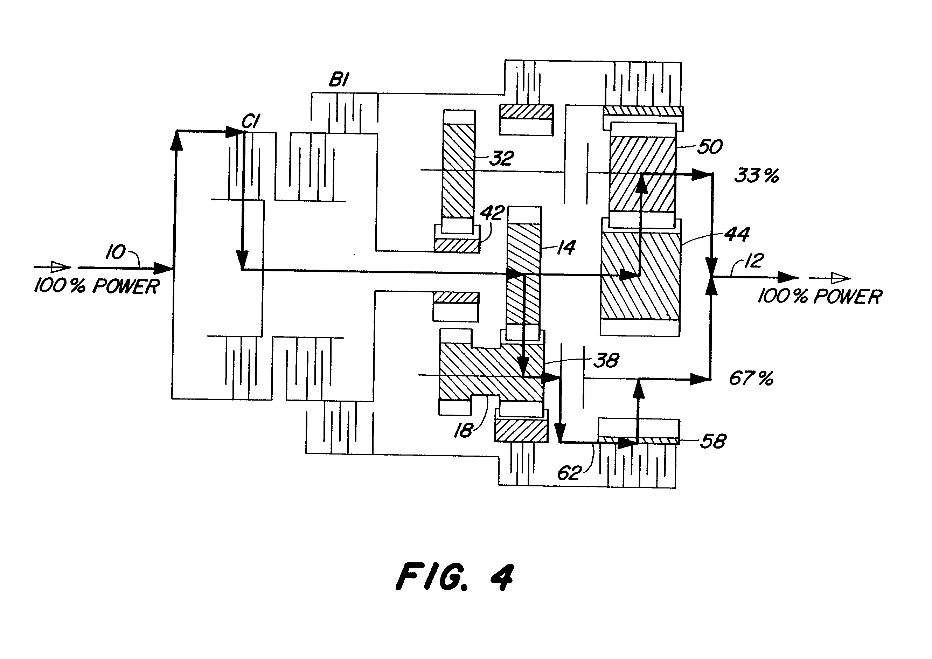

Durch Einrücken der Bremse B1 und der Kupplung C1 wird für den dritten Gang eine kleinere Untersetzung erreicht. Unter Bezugnahme auf Fig. 4 ist auszuführen, daß die Sonnenräder 14 und 44 in den Kraftfluß von der Eingangswelle 10 einbezogen sind. In diesem Zustand sind die Bremsen B3 und B2 nicht angelegt, wohingegen die Bremse B1 betätigt ist, so daß der Umlaufräderträger 38 frei umlaufen kann und das zweite Sonnenrad 42 mit den Umlaufrädern 32 des zweiten Satzes reagiert. Die Umlaufräder 32 wiederum reagieren mit den Umlaufrädern 18 des ersten Satzes. Da das erste Sonnenrad 14 die Umlaufräder 18 in Umlauf versetzt, wird aufgrund des Eingriffes dieser Umlaufräder der Umlaufräderträger 38 um das zweite Sonnenrad 48 umlaufen. Die Leistung wird dann wiederum über das Verbindungselement 62 auf das Hohlrad 58 übertragen. Da jedoch das relative Übersetzungsverhältnis der Umlaufräder 32 zu dem Sonnenrad 42 die Drehzahlreduktion zwischen dem Umlaufräderträger 38 und der Welle 15 verkleinert, ist der dritte Gang schneller als der zweite. Daher wird, obwohl das Hohlrad 58 noch das Sonnenrad 14 unterläuft, eine höhere Drehzahl bzw. Geschwindigkeit oder ein geringeres Moment in die Gruppe A2 durch das Verbindungselement 62 übertragen, als es für den zweiten Gang der Fall ist. Der übrige Teil der Leistung wird dann durch die miteinander kämmenden Teile der Gruppe A2, und zwar das Sonnenrad 44, die Umlaufräder 50 und das Hohlrad 58 übertragen, wie es vorstehend beschrieben war und wie es in Fig. 4 dargestellt ist. Da nun der Umlaufräderträger 38 mit einer höheren Drehzahl mit Bezug auf den zweiten Gang umläuft, ist die Drehzahl der Ausgangswelle 12 im dritten Gang höher.

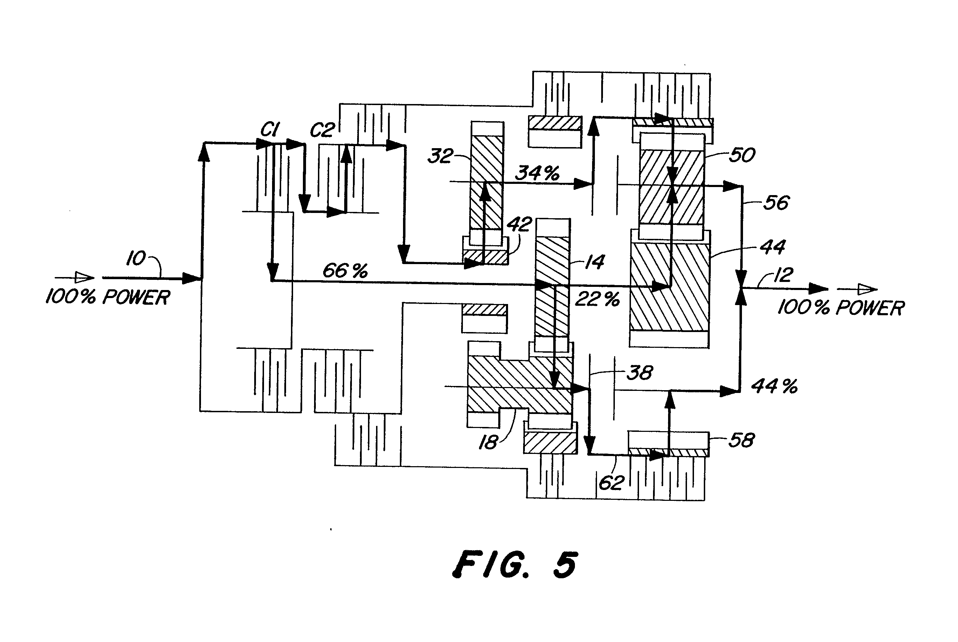

In Fig. 5 ist der Kraftflußverlauf für den vierten Gang dargestellt, der einen direkten Antrieb zwischen der Eingangswelle 10 und der Ausgangswelle 12 durch gleichzeitiges Einrücken der Kupplung C1 und C2 bewirkt, so daß das erste und das zweite Sonnenrad 16 und 42 gemeinsam umlaufen. Daher wird eine Komponente der Leistung direkt durch die Kupplung C2, das zweite Sonnenrad 42 und die Umlaufräder 32 auf den Umlaufräderträger 38 übertragen. Der übrige Teil der Leistung von der Eingangswelle 10 gelangt in die Welle 15, und ein Teil wird durch das erste Sonnenrad 14 abgezweigt und zu den Umlaufräderträger 38 über die Umlaufräder 18 geleitet. Die durch die Gruppe A1 verlaufende Leistung wird dann wiederum in die Gruppe A2 durch das Verbindungselement 62 übertragen. Das Sonnenrad 44 der Gruppe A2 überträgt dann die verbleibende Leistung in der Welle 15 in die weiteren Elemente der Gruppe A2. Der synchronisierte Eingang in den Planetenabschnitt von dem Hohlrad 58 und dem Sonnenrad 44 läßt den Umlaufräderträger 56 ohne Drehung der Umlaufräder 50 umlaufen, so daß die Ausgangswelle 12 nun mit der gleichen Geschwindigkeit wie das Sonnenrad 44 umläuft.

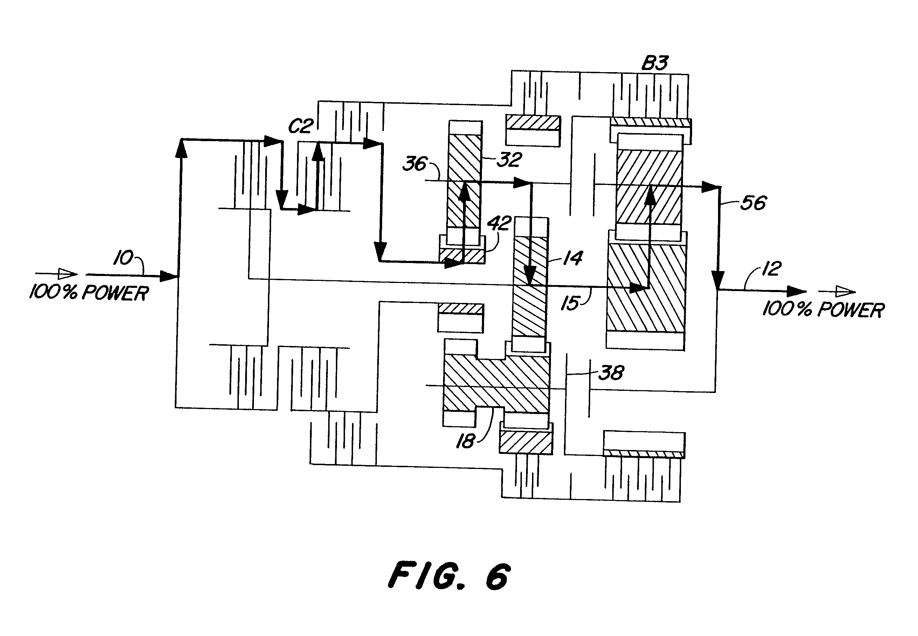

Der Kraftflußverlauf für den ersten Rückwärtsgang ist in Fig. 6 dargestellt, was durch Betätigung der Kupplung C2 und der Bremse B3 erreicht wird. Durch das Einrücken der Kupplung C2 wird die Leistung von der Welle 10 zu dem zweiten Sonnenrad, wie es für den vierten Gang beschrieben wurde, gelangen. Das Anlegen der Bremse B3 verhindert eine Drehung des Umlaufräderträgers 38, wodurch die Umlaufräder 32 um die Welle 36 umlaufen und die Umlaufräder 18 antreiben. In diesem Zustand wirken die Umlaufräder 32 als Umkehrräder, wodurch die Drehrichtung des ersten Sonnenrades 14 mit Bezug auf die Eingangswelle 10 umgekehrt wird. Die Leistung wird dann letztlich auf die Ausgangswelle 12 durch die Gruppe A1 in der vorstehend für den ersten Gang beschriebenen Art übertragen. Jedoch anders als bei dem Kraftflußverlauf für den ersten Gang wird die gesamte Leistung der Eingangswelle durch die Gruppe A2 geführt, wodurch das Drehzahlverhältnis zwischen Eingang und Ausgang erhöht wird, bevor die Leistung in die Gruppe A2 gelangt.

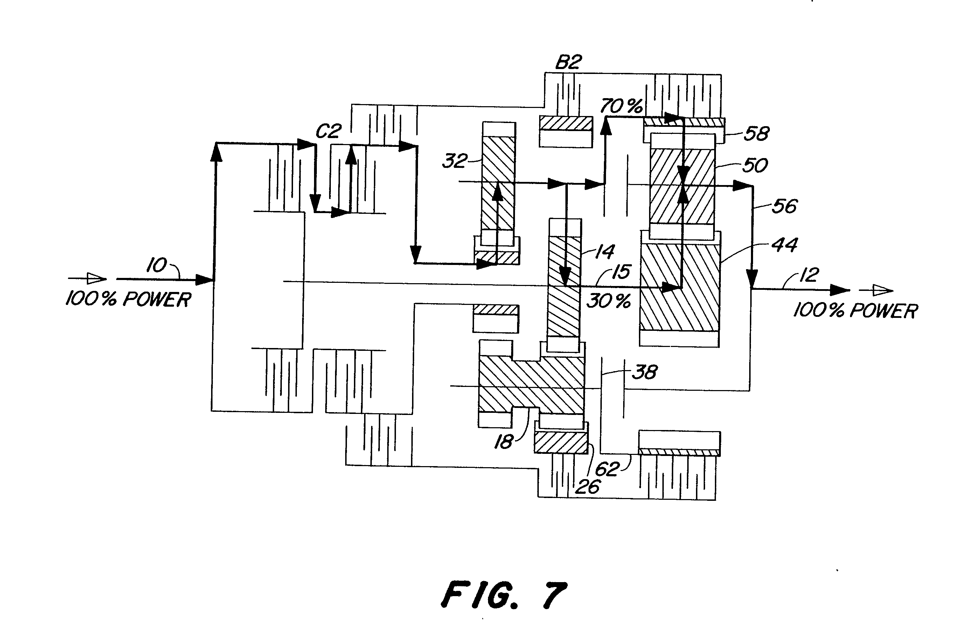

Der zweite Rückwärtsgang (Fig. 7) wird dadurch erreicht, daß die Kupplung C2 eingerückt und die Bremse B2 eingelegt wird. Der Kraftflußverlauf erfolgt dann zu den Umlaufrädern 32 in der vorstehend für den ersten Rückwärtsgang beschriebenen Art und Weise. Bei offener Bremse B3 und angelegter Bremse B2 wird die Reaktion der Umlaufräder 18 mit dem festgesetzten Hohlrad 26 bewirken, daß der Umlaufräderträger 38 in einer Drehrichtung umläuft, die der der Eingangswelle entgegengesetzt ist. Das Festsetzen des Hohlrades 26 bewirkt, daß das erste Sonnenrad 14 den Umlaufräderträger unter dem Einfluß der Umlaufräder 18 überläuft. Die Drehung des Umlaufräderträgers 38 wird dann auf das Hohlrad 58 über das Verbindungselement 62 übertragen, wobei 70 % der Leistung über die Gruppe A1 übertragen werden und die übrige Leistung über die Welle 15 zu dem Sonnenrad 44 gelangt. Infolge der zusätzlichen Drehung des Hohlrades 58 wird der Satz mit den Umlaufrädern 50 um das Sonnenrad 44 mit einer höheren Drehzahl umlaufen, so daß die Drehzahl des Umlaufräderträgers 56 im Vergleich zu der Drehzahl im ersten Rückwärtsgang erhöht ist.

Aus den Fig. 1 und 3 bis 7 ist zu ersehen, daß in allen Gängen mit Ausnahme des ersten Vorwärts-und Rückwärtsganges eine sehr günstige Kraftverzweigung durch die Gruppen A1 und A2 erreicht wird. Diese Kraftverzweigung bewirkt eine geringere Belastung der einzelnen Getriebeteile für die meiste Zeit, in der das Getriebe betätigt wird. Hierdurch wiederum können die Getriebekomponenten in ihrem Umfang reduziert werden.

## Claims

1.) Aus zwei Gruppen (A1, A2) bestehendes Planetenräderwechselgetriebe mit einer Eingangswelle (10), einer Ausgangswelle (12), drei Bremsen (B1, B2, B3) und zwei Kupplungen (C1, C2), wobei die erste Gruppe (A1) ein erstes Sonnenrad (14), ein zweites Sonnenrad (42), ein zum ersten Sonnenrad (14) konzentrisch angeordnetes Hohlrad (26) und einen Umlaufräderträger (38) mit wenigstens einem Satz mit dem Hohlrad (26) und dem ersten Sonnenrad (14) kämmenden Umlaufrädern (18) und die zweite Gruppe (A2) ein Sonnenrad (44), ein Hohlrad (58) und einen Umlaufräderträger (52) mit mit dem Hohlrad (58) und dem Sonnenrad (44) der zweiten Gruppe (A2) kämmenden Umlaufrädern (50) aufweist und das erste Sonnenrad (14) der ersten Gruppe (A1) mit der Eingangswelle (10) kuppelbar ist. dadurch gekennzeichnet, daß der Umlaufräderträger (38) der ersten Gruppe (A1) einen zweiten Satz Umlaufräder (32) aufweist, die mit dem ersten Satz Umlaufräder (18) und dem zweiten Sonnenrad (42) kämmen. das zweite Sonnenrad (42) mit der Eingangswelle (10) kuppelbar ist und das zweite Sonnenrad (42), das Ringrad (26) und der Umlaufräderträger (38) der ersten Gruppe (A1) abbremsbar sind.

2.) Planetenräderwechselgetriebe nach Anspruch 1, dadurch gekennzeichnet, daß das erste Sonnenrad (14) der ersten Gruppe (A1) und das Sonnenrad (44) der zweiten Gruppe (A2) auf einer gemeinsamen Welle (15) angeordnet sind.

3.) Planetenräderwechselgetriebe nach Anspruch 1 oder 2, dadurch gekennzeichnet, daß der Umlaufräderträger (38) der ersten Gruppe (A1) mit dem Hohlrad (58) der zweiten Gruppe (A2) drehfest verbunden ist.

FIG. 1

0 245 659

| GEAR | CI | C2 | BI | B2 | B3 | RATIO |
|------|-----|-----|-----|-----|-----|-------|
| 1 | X | | | | X | 4.59 |
| 2 | X | | | X | | 2.20 |
| 3 | X | | X | | | 1.52 |
| 4 | X | X | | | | 1.00 |
| RI | | X | | | X | 6.06 |
| R2 | | X | | X | | 1.36 |

FIG. 2

**FIG. 3**

**FIG. 4**

FIG. 5

**FIG. 6**

**FIG. 7**

B2

70%

C2

58

32

50

56

44

14

15

10

12

**100% POWER**

30%

**100% POWER**

38

18

62

26

0 245 659